# EUROPEAN PATENT SPECIFICATION

(11) **EP 2 240 933 B1**
(45) Date of publication and mention of the grant of the patent: **21.10.2015**
(21) Application number: 08856385.3
(22) Date of filing: 26.11.2008
(51) Int. Cl.: G11B 21/08

(54) **ORGANIZING AND PUBLISHING ASSETS IN UPNP NETWORKS**
ORGANISATION UND VERÖFFENTLICHUNG VON INHALTEN IN UPNP-NETZWERKEN
ORGANISATION ET PUBLICATION DE CONTENUS DANS DES RÉSEAUX UPNP

(30) Priority: 07.12.2007 US 952588; 07.12.2007 US 952594; 08.12.2007 US 953014; 08.12.2007 US 953015
(43) Date of publication of application: 20.10.2010
(73) Proprietor: Google Inc., Mountain View, CA 94043 (US)
(72) Inventor: GARCIA, David, Mountain View, CA 94043 (US); TAO, Bo, Mountain View, CA 94043 (US); XIA, Xiyuan, Mountain View, CA 94043 (US); BROYDE, Dmitry, Mountain View, CA 94043 (US); ZHUO, Shao, Lin, Mountain View, CA 94043 (US); HARDING, John, M., Mountain View, CA 94043 (US); LEE, Yen-Jen, Mountain View, CA 94043 (US)
(74) Representative: Betten & Resch
(86) International application number: PCT/US2008/085052
(87) International publication number: WO 2009/073566

(56) References cited:
- WO-A2-03/073229
- US-A1- 2007 101 024
- US-A1- 2007 136 778
- US-A1- 2007 143 489
- US-A1- 2007 143 489
- US-A1- 2007 156 447
- US-A1- 2007 156 447

## Description

### BACKGROUND OF THE INVENTION

### 1. FIELD OF THE INVENTION

This invention pertains in general to media distribution and access over a network, and in particular to media distribution and access using a limited local network access protocol.

### 2. DESCRIPTION OF THE RELATED ART

Universal Plug and Play (UPnP) is a set of local network protocols that allows various types of consumer electronic devices to connect seamlessly to home, proximity and small business networks. UPnP allows network connectivity to various types of compliant devices, such as computers, media players, and wireless devices connected to a single, common local network. Devices can dynamically join the local network with zero-configuration by obtaining an IP address, announcing its name, conveying its capabilities and learning what other devices are on the network. UPnP's networking architecture leverages TCP/IP and the internet to enable control and data transfer between devices on the network. The networking architecture allows any two devices to exchange data under the command of any control device on the network. One of the benefits of UPnP is that it can run on any network technology such as Ethernet, Wi-Fi, phone lines and power lines. Another benef of UPnP technology is that it is platform independent and allows vendors to use any type of operating system and programming language to build UPnP capable products.

Although UPnP has many benefits one of the problems with UPnP is that UPnP devices on the network are limited to the content they can render. More specifically, a typical UPnP rendering device, such as a media player, is enabled to access and playback media files of a predetermined type(s) (e.g., MP3s) as provided by a media server located on the same feeds such as RSS or ATOM. Because a conventional UPnP media server is slave device, it is by design unable to provide the UPnP renderer with content other than that which the media renderer is designed to render. In other words, the UPnP rendering device can only render the specific types of content files for which it is designed and the media server is likewise limited (being a "slave" device within the UPnP architecture) to accessing those specific content types.

U.S. Patent Publication No. 2007156447 discloses an apparatus and method capable of purchasing external charged content in a UPnP network are provided. A media server (MS) provides a media renderer (MR) with a URL that executes a CGI that that performs purchasing of a charged content included in an external server, and, if the MR requests the reproduction of content corresponding to the URL, the MS executes a CGI of the URL, purchases charged content corresponding to the URL, and downloads the charged content, thereby browsing a list of contents provided by an external contents purchase site through a consumer electronic device such as a digital television, in which a UPnP audio/visual control point is mounted without a separate interface, purchasing desired content, and reproducing the purchased content.

U.S. Patent Publication No. 2007101024 discloses that in a home network, a proxy is used to convert information in UPnP format from UPnP devices to IEEE 1394 format so that IEEE 1394 devices in the network can access the information which was originally in UPnP format. Likewise, the proxy converts information in IEEE 1394 format from IEEE 1394 devices to UPnP format so that UPnP devices in the network can access the information which was originally in IEEE 1394 format.

As a result, in a conventional UPnP network with a UPnP media renderer and media server, the renderer is unable to access general internet content, such as web pages and data feeds. Additionally, since UPnP is designed for local networks, a first UPnP local network cannot share its content with a second UPnP local network, nor can the first local network transmit its content to remote server not on the first local network.

### BRIEF SUMMARY OF THE INVENTION

Systems and computer program products for enumerating and allowing content on a local or remote network to be renderable by a UPnP rendering device. The system includes a media management module that queries devices located on the local network and remote network for content. The media management module enumerates the content identified in response to the query. The enumerated content is used to create a content directory that is routinely updated with the content available on the local and remote network.

A cross coding module cross codes the content identified in response to the query into a file type and data format renderable by the UPnP rendering device on the local network, for example, rendering an HTML webpage into a JPEG image. The cross coding module cross codes the content by placing the content into a template and processing the template into a data format and file type renderable by the UPnP rendering device. Depending on the content different types of templates are used by the cross coding module. This feature allows a user to use a UPnP rendering device to access content that would otherwise be inaccessible via the UPnP device.

A control point interface module is configured to control devices in order to render content on a renderer. The devices on the local network are controlled through a first communication protocol restricted to managing communication between devices across the local network. The first communication protocol is further restricted in that it does not allow for content transport. A second communication protocol is used by the system for transporting content and data within and across networks.

These and other features and advantages of the present invention will be presented in more detail in the following detailed-description and the accompanying figures which illustrate by way of example the principles of the invention.

### BRIEF DESCRIPTION OF THE DRAWINGS

FIG. 1 is a high-level block diagram illustrating the basic UPnP architecture in which the embodiments of the invention operate.
FIG. 2 is a high-level block diagram illustrating UPnP devices connected to a network according to one embodiment.
FIG. 3 is a high-level block diagram illustrating modules within a renderer according to one embodiment.
FIG. 4 is a high-level block diagram illustrating modules within a control point according to one embodiment.
FIG. 5 is a high-level block diagram illustrating modules within a media server according to one embodiment.
FIGS. 6A and 6B are sequence diagrams illustrating the content enumeration according to one embodiment.
FIG. 7 is a sequence diagram illustrating the process of accessing and rendering non-dynamic content on the renderer according to one embodiment.
FIGS. 8A and 8B are sequence diagrams illustrating the process of accessing and rendering dynamic content on the renderer according to one embodiment.
FIG. 9 is sequence diagram illustrating the process of transferring content from an upload client to the media server and transmitting the content over the Internet onto a host service according to one embodiment
FIG. 10 is a high-level block diagram illustrating modules within an upload client according to one embodiment.
FIG. 11 is sequence diagram illustrating the process of a first UPnP local network sharing and exchanging the content stored on the first UPnP local network with a second UPnP local network according to one embodiment.

The figures depict various embodiment of the present invention for purposes of illustration only One skilled in the art will readily recognize from the following discussion that alternative embodiments of the structures and methods illustrated herein may be employed without departing from the principles of the invention described herein.

### DETAILED DESCRIPTION

### I. OVERVIEW

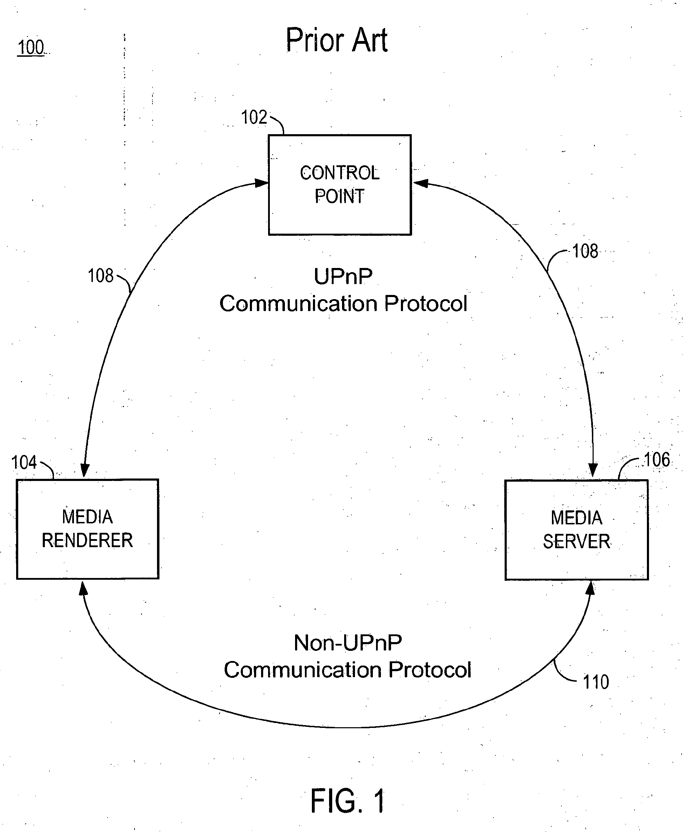

FIG. 1 is a high-level block diagram illustrating the basic UPnP architecture in which the embodiments of the invention operate. FIG. 1 illustrates a control point 102, a media renderer 104, and a media server 106. The control point 102 controls the operations performed by the media renderer 104 and the media server 106 usually through a user interface (e.g. buttons on remote control). In the UPnP architecture the media renderer 104 and the media server 106 cannot directly control each other. Through a UPnP communication protocol 108 the control point 102 communicates with the media server 104 and the media renderer 106.

The media server 106 contains or has access to the content stored locally or on an external device connected to the media server 106. As used herein, content includes all types of data files, such as still images (e.g., JPEG, BMP, GIF, etc.), videos (e.g., MPEG, DiVX, Flash, WMV, etc.), and audio (e.g., MP3, WAV, MPEG-4, etc.). The media server 106 is able to access the content and transmit it to the media renderer 104 through a non-UPnP communication protocol 110. In one embodiment, the non-UPnP communication protocol 110 is Transmission Control Protocol/Internet Protocol (TCP/IP). In order for the content exchange between the media renderer 104 and the media server 106 to be successful, the content must be in a transfer protocol and data format that is compatible with both the media server 106 and the media renderer 104.

The media renderer 104 obtains content from the media server 106 through the non-UPnP communication protocol 110. The media renderer 104 can receive the content as long as the data is sent in the proper protocol and data format. Media renderers 104 are limited in the content they can support and render. For example, a media renderer 104 may only support audio files, while another type of media renderer 104 may support a variety of content such as videos, still images and audio.

Generally, the control point 102 uses a first communications protocol, restricted to managing communication across the local network to initialize and configure the media renderer 104 and the media server 106 to exchange data between the two. This first restricted communications protocol itself does not provide for content transport. In some embodiments, the control point 102 supports only a single communication protocol, and in some cases that single protocol is the UPnP protocol. As a result, the control point 102 is unable to communicate with any device, whether locally or remotely located that do not support the UPnP protocol.

In the various embodiments, this first communications protocol is the UPnP communication protocol 108. However, the control point 102 is not involved in the actual transfer of content since it occurs through a non-UPNP communication protocol 110. When specific content is going to be exchanged between the media server 106 and the media renderer 104, the control point 102 makes sure that the transfer protocol and data format for the content exchange is supported by the media render 104 and the media server 106. Once the control point 102 determines the transfer protocol and data format of the content, the control point 102 informs the media server 106 and the media renderer 106 that an outgoing/incoming exchange of content is going to occur in a specific transfer protocol and data format. Once the exchange of content begins through the non-UPnP communication protocol 110 the control point 102 is no longer involved in the content transfer process.

Although FIG. 1 shows the control point 102, the media renderer 104, and the media server 106 as independent devices it must be understood that a single device can have the capabilities of a control point, media renderer and/or a media server. An example of such a device is a personal computer that can render content on its monitor, can access local content stored on its hard drive, and can control other devices through a user interface.

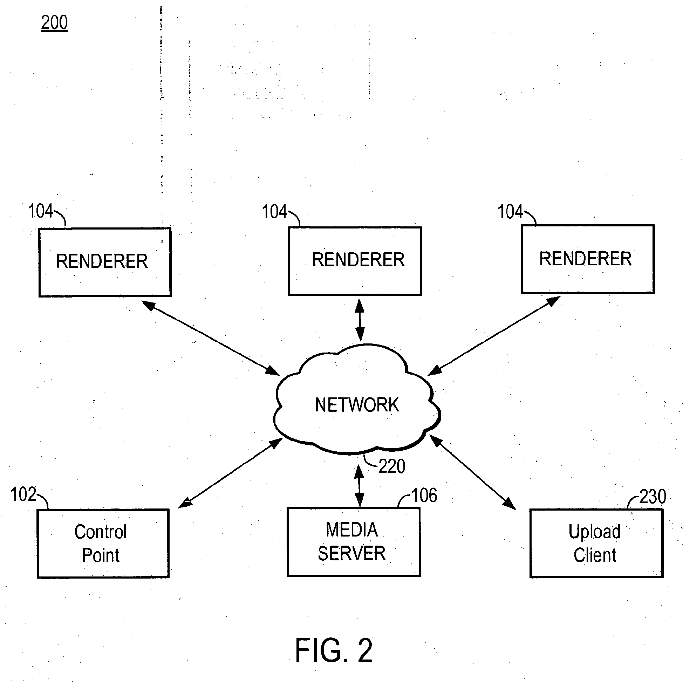

FIG. 2 is a high-level block diagram illustrating UPnP devices connected to a network according to one embodiment. FIG. 2 illustrates the control point 102, the media server 106, a plurality of renderers 104, and an upload client 230 connected by a network 220. The control point 102, the renderers 104, and the media server 106 in FIG. 2 have the same functionality as in FIG. 1. The primary purpose of the control point 102 is to be able to control all of the devices connected to the network 220 through the UPnP communication protocol 108.

The purpose of the media server 106 is to provide the control point 102 access to all the content within the devices connected to the network 220. The purpose of the renderers 104 is to render any content transferred from the media server 106 or other devices on the network 220. The upload client 230 is a device with storage capabilities. Other devices with UPnP communication capabilities may exist on the network 220.

The network 220 represents the communication pathways between the control point 102, the media server 106, and the renderers 104. In one embodiment, the network 220 comprises a local network using the UPnP protocol, coupled via a gateway or other network interface for communication with the Internet. The network 220 can also utilize dedicated or private communications links that are not necessarily part of the Internet. In one embodiment, the network 220 uses standard communications technologies and/or protocols. Since the network uses standard communication technologies and/or protocols, the network 220 can include links using technologies such as Ethernet, 802.11, integrated services digital network (ISDN); digital subscriber line (DSL), asynchronous transfer mode (ATM), etc. Similarly, the networking protocols used on the network 220 can include the transmission control protocol/Internet protocol (TCP/IP), the hypertext transport protocol (HTTP), the simple mail transfer protocol (SMTP), the file transfer protocol (FTP), etc. The data exchanged over the network 220 can be represented using technologies and/or formats including the hypertext markup language (HTML), the extensible markup language (XML), etc. In addition, all or some of links can be encrypted using conventional encryption technologies such as the secure sockets layer (SSL), Secure HTTP and/or virtual private networks (VPNs). In another embodiment, the entities can use custom and/or dedicated data communications technologies instead of, or in addition to, the ones described above.

It must be understood that throughout the description of the present invention, communication between the control point 102 or the upload client 230 and the renderer 104 or the media server 106 occurs through a restricted first communication protocol, such as the UPnP communication protocol 108. The UPnP communication protocol 108 is restricted to device managing communication across the local network. It must also be understood that transmission of content between the media server 106, the renderer 104, and the upload client 230 occurs through the non-UPnP communication protocol 110 (e.g., TCP/IP). Additionally, communication and transmission of content between the media server 106 and a server or device not coupled to the local network occurs through the non-UPnP communication protocol 110.

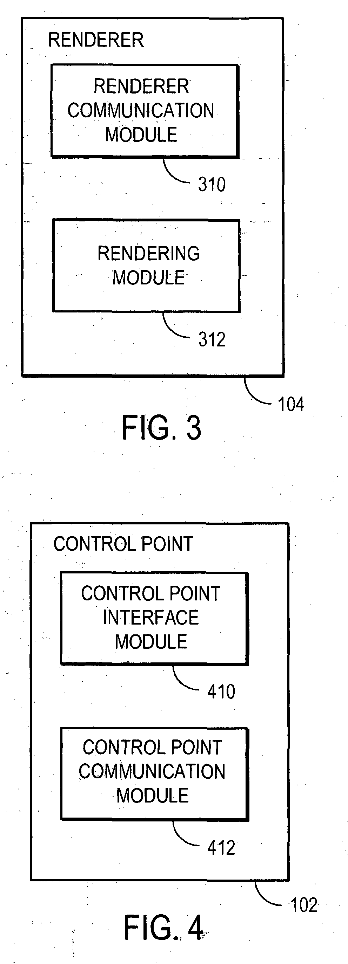

FIG. 3 is a high-level block diagram illustrating modules within a renderer 104 according to one embodiment. Those of skill in the art will recognize that other embodiments can have different and/or other modules than the ones described here, and that the functionalities can be distributed among the modules in a different manner.

As shown in FIG. 3, the renderer 104 includes a renderer communication module 310 that handles the renderer's communication with the other devices on the network 220. In one embodiment, the renderer communication module 310 communicates with the control point 102 through a UPnP communication protocol 108. In another embodiment, the renderer communication module 310 transmits and receives data from the control point 102 and the media server 106 and/or other devices through a non-UPnP communication protocol 110 such as TCP/IP.

The rendering module 312 renders data of the proper file type and format. In one embodiment, the rendering module 312 renders data as it its received by the renderer communication module 310 from the media server 106 or other devices on the network 220. To render the data, the rendering module 312 uses appropriate decoding programs such as JPEG decoding for JPEG images, MP3 decoding for MP3 audio files. As mentioned above, however the renderer 104 will only be able to render those type of files for which the rendering module 312 contains the appropriate decoder. Thus, if the rendering module 312 does not have a decoder for H.264 video, then the renderer 104 will be unable to render it. Similarly, if the rendering module 312 does not include a HMTL parser and Javascript engine, then the renderer 104 would be unable to read a standard webpage. Thus, the capabilities of the rendering module 312 constrain the ultimate playback capabilities of the renderer 104. It is the limited nature of certain rendering devices 104 that the various embodiments of the invention overcome. In one embodiment, the control point 102 through the renderer communication module 310 can instruct the rendering module 312 how to render data, according to the available set of decoding parameters for the appropriate decoding logic (e.g., audio bitrate, video resolution) and the physical attributes of the rendering device (e.g., volume, brightness).

FIG. 4 is a high-level block diagram illustrating modules within a control point 102 according to one embodiment. Those of skill in the art will recognize that other embodiments can have different and/or other modules than the ones described here, and that the functionalities can be distributed among the modules in a different manner.

A control point interface module 410 allows the user to control what goes on in the network between the renderers 104 and the media server 106. The user can give a command to the control point 102 through the control point interface module 410 to render a specific file from the media server 106 on a specific renderer 104. When the user gives the command through the user interface module, the control point 102 works with the devices on the network in order to fulfill the request by the user.

A control point communication module 412 handles all communication with the renderers 104 and the media server 106 on the network 220. In one embodiment, when the control point 102 receives a command from the user through the control point interface module 410 to render a file, the control point communication module 412 will send as command to the media server 106 to prepare to send the file in a specific protocol and data format. The control point communication module 412 notifies the renderer 104 as well to prepare to receive the file in a certain protocol and data format. The control point communication module 412 finishes sending commands and allows the data transfer to occur between the media server 106 and the renderer 104. In another embodiment, the control point communication module 412 communicates with a new device joining the network 220.

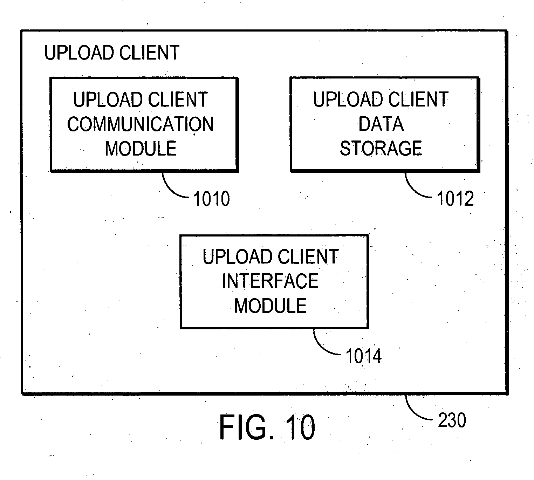

FIG. 10 is a high-level block diagram illustrating modules within an upload client 230 according to one embodiment. Those of skill in the art will recognize that other embodiments can have different and/or other modules than the ones described here, and that the functionalities can be distributed among the modules in a different manner.

An upload client communication module 1010 handles all communication with the media server 106 and other devices on the network 220. In one embodiment, the upload client communication module 1010 communicates with the media server 106 through the UPnP communication protocol 108. In another embodiment, the upload client communication module 1010 receives and transmits content to the media server 106 and/or other devices through a non-UPnP communication protocol 110 such as TCP/IP. The upload content communication module 1010 may instruct the media server 106 to store the content and to additionally upload the content or only the metadata of the content to a remote server of a hosting service over the Internet.

The upload client data storage 1012 contains data particular to the upload client 230. In one embodiment, the upload client data storage 1012 contains data stored by the functionality of the upload client 230 (e.g. digital picture frame storing images on its memory card or hard drive; digital audio player storing audio files in memory). In one embodiment, the upload client communication module 1010 stores data sent from the media server 106 or from other devices on the network 220 on the upload client data storage 1012. Further, in one embodiment, the upload client data storage 1012 transmits data stored on the upload client data storage 1012 to the media server 106 or other devices on the network 220.

An upload client interface module 1014 allows the user to control the content that is stored on the upload client data storage 1012 and allows the user to control the content that is transmitted from the upload client 230 to the media server 106 and/or other devices on the network. The user through the upload client interface module 1014 can give a command to the media server 106 to store transmitted content, to additionally transmit the content to the remote server over the Internet and/or to only transmit the content's metadata to the remote server over the Internet

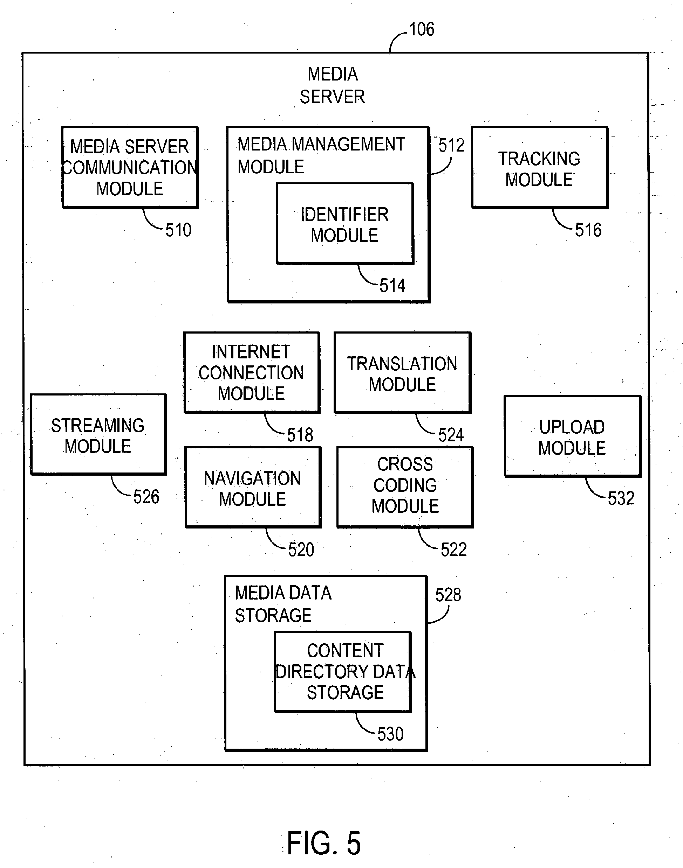

FIG. 5 is a high-level block diagram illustrating modules within a media server according to one embodiment. Those of skill in the art will recognize that other embodiments can have different and/or other modules than the ones described here, and that the functionalities can be distributed among the modules in a different manner.

A media server communication module 510 communicates with the control point 102 and the renderers 104 on the network 220. In one embodiment, the media server communication module 510 receives commands from the control point 102 through a UPnP communication protocol 108. The media server communication module 510 works with the other modules in the media server 106 to fulfill the request sent by the control point 102. In one embodiment, the media server communication module 510 exchanges data with the renderers 104, the upload client 230 and other devices on the network 220 through a non-UPnP communication protocol 110 such as TCP/IP.

A media management module 512 constantly queries the devices on the network 220 with media storage capabilities and pulls data from the Internet to build a content directory. If other media servers exist on the network the media management module queries those as well. The media management module can interface with applications such as GOOGLE DESKTOP from GOOGLE INC. of Mountain View, CA to query the devices on the network. In one embodiment, media management module queries the devices on the network for specific files or data formats (e.g. JPEG, MP3, and WMV). The media management module 512 can also integrate or communicate with software on the devices to get the software's specific directory of data or files. One example of such integration is with the image/video organizing software PICASA from GOOGLE INC. of Mountain View, CA. The media management module 512 integrates with the device's local PICASA software and is able to get the metadata of all the albums in its directory and of all the files within the album.

The media management module 512 is adapted to query a remote server over the Internet for information as well as to subscribe to data feeds from remote sources. The media management module 512 receives data feeds from a news aggregator on subjects like local news, world news, sports news, financial news, traffic news, etc. The media management module 512 is further adapted to retrieve videos from a video sharing website such as YOUTUBE from GOOGLE INC. of Mountain View, CA, by searching, browsing, and/or retrieving featured videos or promoted videos. Further, in one embodiment, the media management module 512 uses the user's login and password information to retrieve data on the user's favorite videos on the video sharing website.

An identifier module 5.14 within the media management module 514 assigns a unique identification number to each individual file and data queried by the media management module 512. The unique identification number is correlated to a uniform resource locator (URL) that contains the location of where the file or data exist. A browse/search results table is created by the identifier module 514 to store the URLs and identification numbers associated for the different files or data queried by the media management module 512.

The media management module 512 builds the content directory with the unique identification numbers and metadata of the files. The highest level of the content directory is a list of broad subjects, such as Videos, Albums, News, etc. The second level of the content directory maybe a list of links to specific content. The content directory is transferred to the control point 102 for rendering when specified by the user. Further, once the user has viewed the content directory, the user can choose certain content in the content directory to render. The media management module 512 routinely queries the devices and the remote servers over the Internet to update the content directory with new content and removes content that is no longer available.

A tracking module 516 tracks the user's rendering history on the renderers 104, the tracked rendering history is used to help build and organize the content directory in a way that content that the user will more than likely enjoy is easily accessible. Whenever the user renders a file on a renderer 104 in the network 220 the tracking module 516 builds and includes the subject matter of the file accessed in a tracking table by using the files metadata. In one embodiment, the tracking table is arranged in a hierarchy with the most popular (e.g., frequently accessed) subject matter on top of the tracking table and the least popular subject matter on the bottom of the tracking table. Further, in one embodiment, the tracking table is updated with subject matter rendered from the Internet. The tracking table created by the tracking module 516 is used by the media management module 512 to build and organize the content directory.

An internet connection module 518 pulls data from an Internet specific service, server or site in order for the media management module 512 to build the content directory. In one embodiment, the internet connection module 518 pulls data feeds from a news aggregator such as GOOGLE NEWS from GOOGLE INC. of Mountain View, CA in RSS or ATOM format. Further, in one embodiment, the internet connection module 518 is able to access files, html pages and/or any content available over the Internet. In one embodiment, the internet connection module 518 is used to upload content to a remote server over the Internet or to transmit only the contents metadata to the remote server.

A navigation module 520 collaborates with the internet connection module 518 to instruct it on what data feeds to subscribe to and remote servers over the Internet to query. In one embodiment, the navigation module 520 is setup on what data feeds to subscribe to or servers to query over the Internet by the user through the control point interface module 410. An example of this is that the user sets the navigation module 520 to retrieve stock information on specific stocks, weather information of a specific area, the user's favorite videos from YOUTUBE, etc. In one embodiment, the navigation module 520 is provided by the user through the control point interface module 410 with the user's login and password information. The navigation module 520 uses the login information in order to have the internet connection module 518 accesses data that requires a subscription and access is only allowed if login information is provided.

A cross coding module 522 will cross code data into a format that can be rendered by the renderers 104. In one embodiment, the cross coding module will determine through the control point 102 what data formats the renderers 104 on the network 220 can render. Conventional transcoding changes the format of a given type of media file, for example, changing a video file in the WMV format to a H.264 video format, or changing an MP3 audio file to an AAC file, or changing a JPEG image to GIF image, while maintaining the original type of media, such as a video file, audio file, or image. By comparison, cross coding changes the type of the data as well: converting textual (or markup) documents into images, converting images into videos, converting textual (or markup) documents into videos. The cross coding module 522 uses the data format and file type information provided by the control point 102 to cross code the data pulled by the internet connection module 518 into a format and file type that can be rendered by the renderers 104.

One example is that of the internet connection module 518 retrieving data over the Internet from a news aggregator of a news article in RSS format, where the renderer 104 can only render still images in formats such as JPEGs and BMPs with a maximum display size of 800x600. In this instance, the cross coding module 522 will load the RSS data into a page template adapted to the display size for the renderer 104, and process the page template into a JPEG image of the appropriate size. In one embodiment, different templates exist for data of different content, such as news, stocks, weather, traffic, online forums, html page, etc. If the article in RSS data format consist of multiple pages the cross coding module 522 will recognize the multiple pages, and turn each page (or portion thereof) of the article into a JPEG sized for the rendering device.

Further, in one embodiment, for every JPEG created and saved on the media server a URL is created that specifies the location of where the JPEG is stored. After the data is cross coded the identifier module 514 assigns a unique identification number that is associated to the specific URL of the JPEG of the article. The identifier module 514 will then store both the URL and the associated identification number in the browse/search results table. The identification number is used by the media management module 512 to include the JPEG of the article in the content directory, which allows the user to be able to render the article, where as before it could not because the renderer 104 could only render still images.

In one embodiment, if any of the renderers 104 on the network 220 can render video files (e.g. WMV format files) the cross coding module 522 will recognize it and turn the multiple JPEGs of the multiple page news article, typically in a HTML format, into a video file. In one embodiment, the process of converting the multiple JPEGs of the news article into a video includes the cross coding module 522 specifying a pixel range in each JPEG (either the entire image or a portion thereof) to be rendered as a video frame; if the image is larger than the video frame, it can be down-sampled to the appropriate size. Then the set of video frames is encoded into the video file, using a suitable encoding format that the rendering device is capable of decoding. The video file is assigned a unique identification number that is associated to a specific URL of the location of the video file and is included in the content directory. In one embodiment, the user through the control point 102 can request to render the video file on a renderer 104 with video rendering capabilities in a way that it appears the user is scrolling though the news article. It must be understood that the present invention is not limited to retrieving news articles. A news article was used for ease of understanding the present invention. The cross coding module 522 can cross code any data into a format and file type acceptable by the renderer 104 for rendering.

In one embodiment, if the media server 106 contains a video file (e.g. WMV format files) or receives a video feed, but a renderer 104 on the network 220 cannot render video files and can only render still images, the cross coding module will recognize it and turn the video file into one or more still images (e.g. JPEGs). In one embodiment, the process of cross coding the video file into one or more still images comprises selecting one or more frames in the video file and placing them in a page template adapted to the display size for the renderer 104, and then rendering the page template into a still image. The still images created by this process are each individually assigned a unique identification number that is associated to a specific URL of the location of the still image and each image is included in the content directory.

In one embodiment, after the renderers on the network 220 have been queried, the internet connection module has retrieved specific data, and the data retrieved over the Internet is in a format and file type that the renderers can render, the content directory is complete and can be rendered to the user. A translation module 524, in one embodiment, will read the content directory in the media server 106 and translate it into a markup language (e.g. XML). When the translated content directory is renderered to the user, the translated content directory is rendered in a way that the user can easily navigate through the translated content directory.

A streaming module 526 streams dynamic content received over the Internet to a renderer 104 upon the request from the user. Dynamic content is content that periodically and frequently changes or is updated, such as securities prices, traffic information and traffic images, online forums postings, weather information etc., as compared to static content (e.g., such as a document, an article, an image, a video file, an audio file). When the user selects to view dynamic content the streaming module 526 will make sure that the internet connection module 518 continuously retrieves the data corresponding to the dynamic content, that the cross coding module 522 turns the retrieved data into a format and file type that is acceptable by the renderer 104, that the created files are put into the content directory, and a translated content directory is available and can be transmitted if requested by the user. In one embodiment, the data of the dynamic content is retrieved from a device on the local network.

If the renderer 104 can render video files and the user has selected to view dynamic content the streaming module 526 will make sure the internet connection module 518 retrieves data corresponding to the dynamic content, that the cross coding module 522 turns the retrieved data into JPEGs, and that the JPEGS are rendered into video frames. The streaming module 526 will then stream the video frames to the renderer 104 for rendering without the user continuously needing to request the data. In one embodiment, if the user selects to render a video file from the content directory, through the URL the streaming module will recognize if the location of the video file is on a remote server over the Internet. If the video file is located on the remote server, the internet connection module 518 will download the video onto the media server 106 and as it downloads the streaming module 526 will stream the video to the renderer 104 for rendering.

A media data storage 528, stores the content that is cross coded into a new file type and format by the cross coding module 522. In one embodiment, the media data storage 528 stores content transferred by devices on the network for storage (e.g. storing music files from an MP3 player on the media server 106). The media data storage 528 is where the tracking table and the browse/search results table are stored. The user logins and password information for various websites and/or data feeds are stored in the media data storage 528 for the navigation module to access them. A content directory storage 530 within the media data storage 528 stores the content directory created and updated by the media management module 512.

An upload module 532 uploads content or the metadata of the content from the upload client 230 or the media server 106 to a remote server of a host service (e.g. video or file sharing website) over the Internet. The upload module 532 works in conjunction with the internet connection module 518 to request an upload URL from a host website and to transmit the content or the metadata to the host service. In conjunction with the internet connection module 518, the upload module 532 makes sure to receive notification when the content or metadata has been transferred to the host service. In one embodiment, the upload module 532 works with the navigation module 520 to determine from what host service or remote server to request an upload URL. In one embodiment as the media server 106 receives the content from the upload client 230, the upload module simultaneously transmits the content or metadata to the host service.

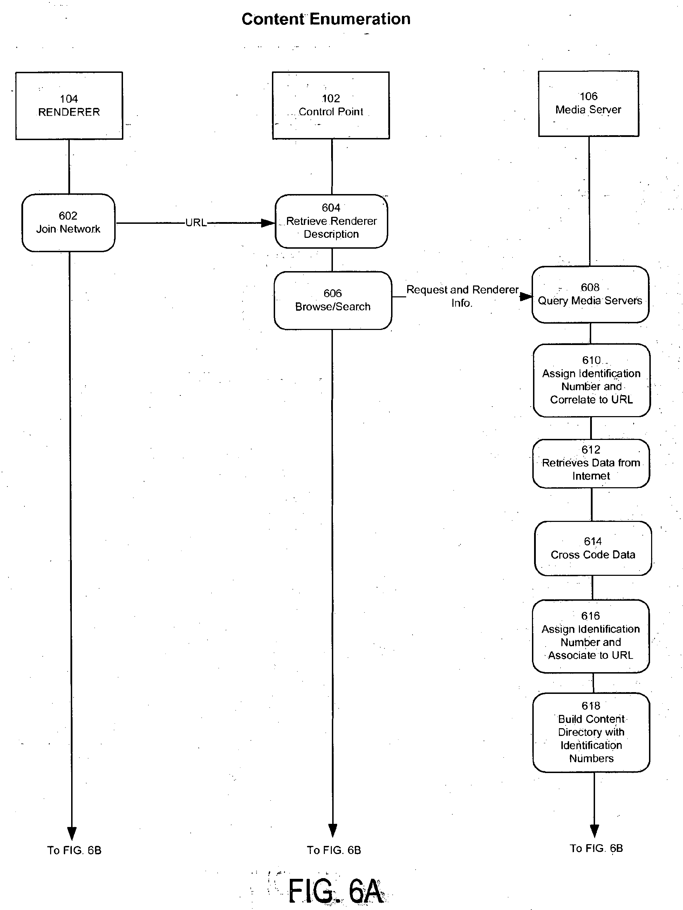

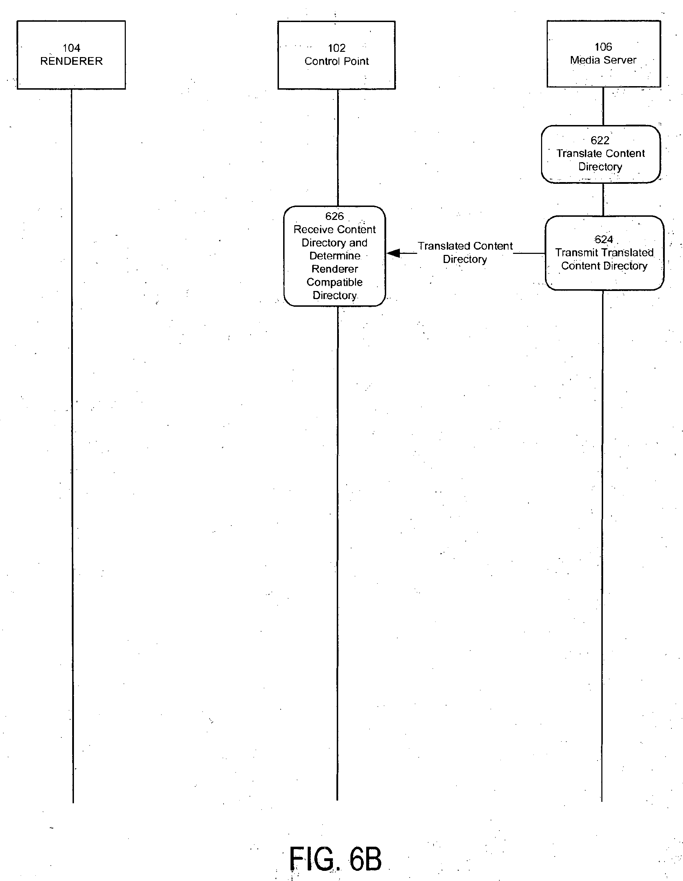

FIGS. 6A and 6B are sequence diagrams illustrating the content enumeration according to one embodiment. Those of skill in the art will recognize that other embodiments can perform the steps of FIGS. 6A and 6B in different orders. Moreover, other embodiments can include different and/or additional steps than the ones described here.

FIGS. 6A and 6B illustrate steps performed by the renderer 104, control point 102, and media server 106 in rendering browse/search results on a renderer 104 in the form of a content directory. Initially in FIG. 6A, a renderer 104 joins 602 the network 220. The renderer 104 provides the control point 102 with a URL. The control point 102 uses the URL to retrieve 606 the renderer's 104 description, including the renderer's capabilities, such as data formats and file types that the renderer 104 can render. The user through the control point 102 places a browse/search request 608 to the media server 106. The user can request a browse on everything on the network 220, to query specific remote servers over the Internet, and to retrieve specific data feeds over the Internet. The user can also request to query everything on the network 220 and specific remote servers over the Internet for a specific file and/or data. Preferably, the query results are organized based on the users rendering history on the renderers 104.

The media server 106 receives 608 a request from the control point 102 with instructions to prepare to transmit the browse/search results to the control point 102. Additionally, the request from the control point 102 includes details about the renderers 104 on the network 220, such as data formats, file types and protocols that the renderers 104 accept. If the request does not include details regarding the renderers 104 on the network, the media server 106 can request the details of the renderers 104 from the control point 102.

Upon the reception of the browse/search request, the media server 106 queries 608 the devices on the network 220. If other media servers exist on the network 220, those are queried as well. The query results are a list of the content on the network 220 with the details regarding the content (e.g. file size, format of file, location of file, etc.). In one embodiment, the media server queries for files of a specific format and/or files in the directory of a specific software. Every file in the query results is assigned 610 a unique identification number. The unique identification number along with a URL that contains the location of the content are both associated and placed in the browse/search results table, which is stored in the media server 106, along with metadata of the file.

The media server 106 retrieves 612 data feeds and/or files from a remote server or service over the Internet. Typically, the user has previously setup the media server 106 to subscribe to specific data feeds or to query specific remote servers. For example, the data retrieved is the latest news from a news aggregator specified by the user, videos from a video hosting service, etc. The media server cross codes the data 614 retrieved over the Internet into data formats and file types that are accepted and rendered by the renderers 104 on the network 220. In one embodiment, the data retrieved over the Internet is in RSS or in ATOM format. If some of the renderers 104 on the network 220 render only still images and other renderers render a combination of videos and still images, the media server will cross code the data into still images and will also use the still images to render a video file.

All the data retrieved over the Internet that is in the proper format after cross coding is complete, each individually is assigned 616 a unique identification number. The unique identification number along with a URL that contains the location of the content are both placed in the browse/search results table and saved in the media server 106, along with the metadata of the content. Once all the content retrieved over the network 220 and over the Internet has received an identification number, the media server 106 builds 618 a content directory using the identification numbers and metadata of the content found in the browse/search results table. The content directory is stored on the media server 106. The content directory is organized by the media server 106 in a way that the content of most interest to the user is easily accessible on the content directory. In one embodiment, the content directory is organized by the media server 106 by always tracking the-content the user renders on the renderers 104. In one embodiment, the media server stores the tracking information in the tracking table, which contains information on the subject matter of the content the user renders the_most often.

The content directory is built in a hierarchy so at the highest level are broad titles, such as news, picture albums, videos, traffic, etc. In one embodiment, the second level for each broad title can be the identification numbers for specific content such as the headline news of the day. In another embodiment, the second level of each of the broad titles of the content directory could be the names of a specific video hosting service and the third level if a certain video hosting service is picked, could be identification numbers for the video hosting service's top rated videos or the user's favorite videos. In one embodiment, the content directory is rebuilt or refreshed after a specific amount of time in order to contain the latest content available to the user.

Continuing in FIG. 6B, since the control point 102 has requested the content directory, the media server translates 622 the content directory into a markup language and networking protocol (e.g. DLNA, Intel NMPR, and Windows Media Connect) supported by the control point 102 and devices on the network. In one embodiment, the mark up language the content directory is translated into is XML. The media server 106 transmits 624 the translated content directory to the control point 102. The control point receives 626 the content directory, which is the browse/search results requested by the user. The user is able to navigate the directory through the control point interface module 410.

An example of how the user may navigate the content directory using the control point 102 to access a news article is explained below. Again, it is emphasized that the present invention is not limited to accessing news articles. A news article is used as an example for ease of understanding the user's ability to navigate the content directory to access content. In one embodiment, the content directory is initially rendered to the user at its highest level with folders with titles such as Videos, Photos, News, Finance, etc. If the user selects the News folder, the second level of the news folder is shown to the user. The second level may be a list of subfolders with the titles of the latest headlines. If the user selects a specific article folder, a variety of scaled down sample images will be rendered to the user, which each sample image represent a page of the article. The scaled down individual images are selectable for rendering in full size. In one embodiment, along with the scaled down images is an option to render the article as a video. In one embodiment, the video is selectable for rendering if the renderer 104 selected by the user has video rendering capabilities.

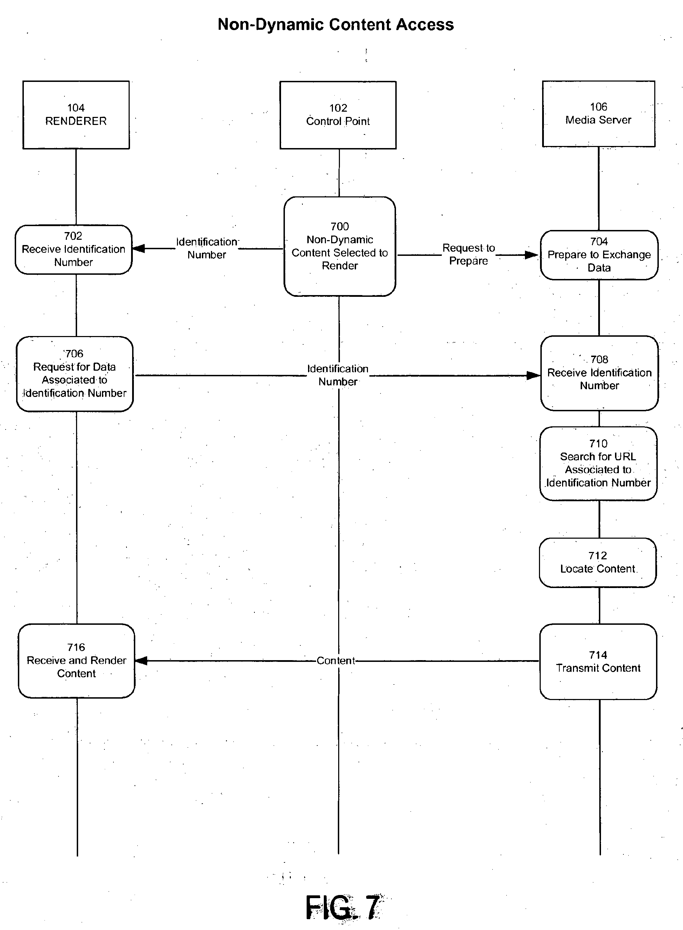

FIG. 7 is a sequence diagram illustrating the process of accessing and rendering non-dynamic content on the renderer 104 according to one embodiment. Those of skill in the art will recognize that other embodiments can perform the steps of FIG. 7 in different orders. Moreover, other embodiments can include different and/or additional steps than the ones described here.

FIG. 7 illustrates steps performed by the renderer 104, the control point 102, and the media server 106 in rendering non-dynamic on the renderers 104. Non-dynamic content is content that does not periodically change within its context, such as a document, an article, an image, a video file, an audio file. Initially, the user navigates the content directory and selects 700 to render non-dynamic content on a specific renderer 104. The renderer 104 receives 702 an identification number of the content selected, a request to render the content selected by the user and a request to prepare to exchange data with the media server 106. The media server 106 as well prepares 704 to exchange data with the renderer 104 based on the request from the control point 102 and also prepares to transmit whatever the renderer 104 requests.

The renderer 104 transmits 706 the identification number of the content selected by the user from the content directory. The media server 106 receives 708 the identification number. The associated URL to identification number provided by the renderer 104 is searched 710 by the media server 106 in the browse/search result table. The media server locates 712 the location of the content using the URL. The media server transmits 714 the non-dynamic content from the media server 106 to the renderer 104. The renderer 104 receives 716 the non-dynamic content and renders it. If based on the URL, the media server 106 determines the content is located on another device or media server on the network 220, the media server 106 will send a request to the control point 102 to have the device or media server that contains the non-dynamic content transmit it to the renderer 104.

If based on the URL the media server 106 realizes the non-dynamic content is located on a remote server over the Internet, the media server will download the content from the remote server prior to transmitting the content to the renderer 104. Further, if the content is a video file, as the media server 106 downloads the video file the media server 106 will stream the video to the renderer 104 for rendering.

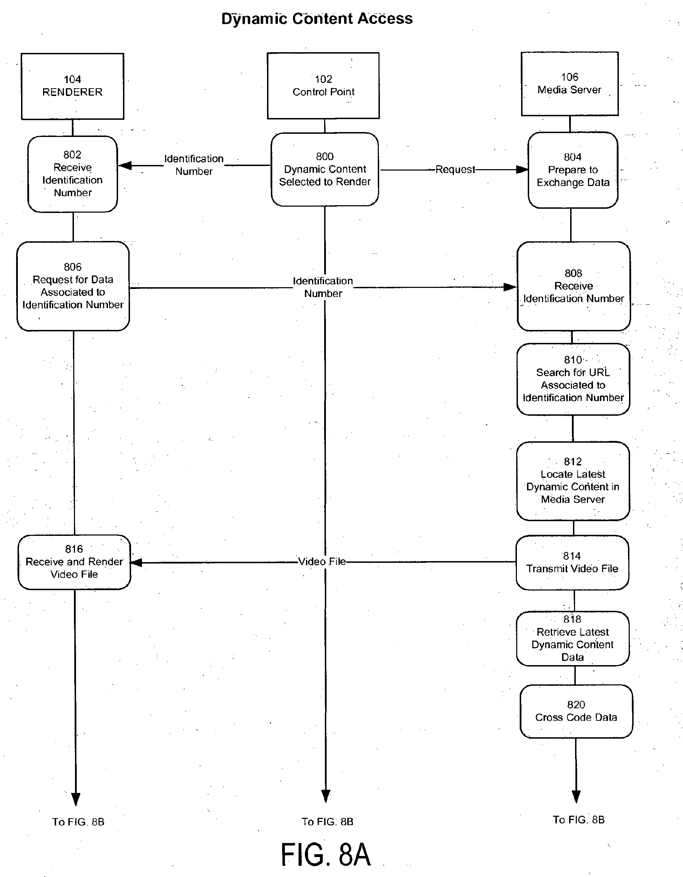

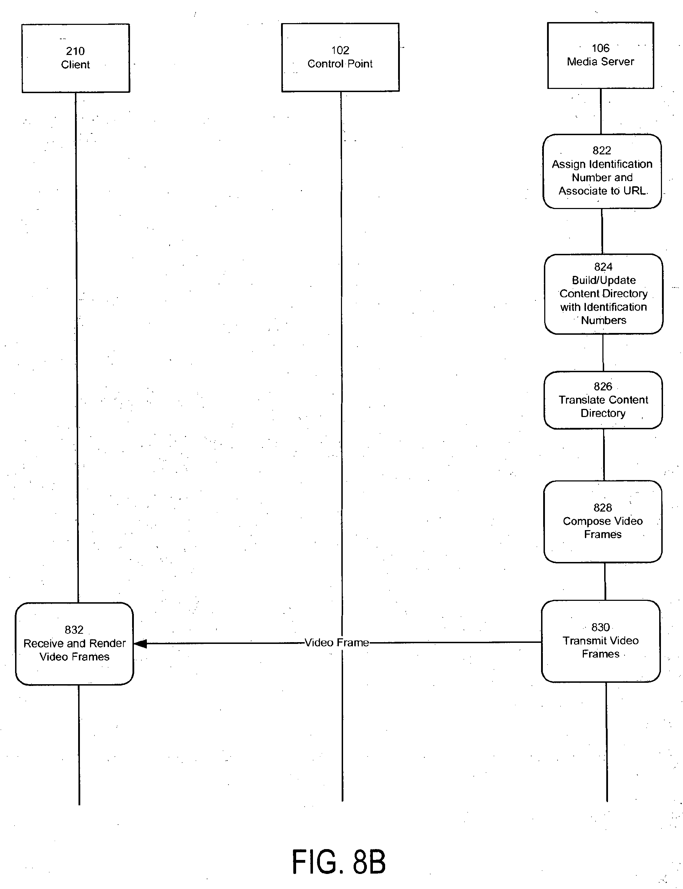

FIGS. 8A and 8B are sequence diagrams illustrating the process of accessing and rendering dynamic content on the renderer 104 according to one embodiment. Those of skill in the art will recognize that other embodiments can perform the steps of FIGS. 8A and 8B in different orders. Moreover, other embodiments can include different and/or additional steps than the ones described here.

FIGS. 8A and 8B illustrate steps performed by the renderer 104, the control point 102, and the media server 106 in rendering dynamic content on a renderer 104 with video rendering capabilities. As noted above, dynamic content is content that periodically and frequently changes or is updated, and would thus otherwise require a renderer 104 to repeatedly refresh a page of content. Initially in FIG. 8A, the user navigates the content directory and selects 800 to render content that is dynamic. The renderer 104 receives 802 a request to render the content selected by the user and a request to prepare to exchange data with the media server 106. The media server 106 prepares 804 to exchange data with the renderer 104 based on the request from the control point 102 and prepares to transmit whatever is requested by the renderer 104.

The renderers 104 transmits 806 the identification number of the content selected by the user from the content directory to the media server 106 and requests the content associated to the identification number. The identification number is received 808 by the media server 106. The associated URL to the identification number is searched 810 by the media server 106 in the browse/search result table. In one embodiment, based on the metadata in the browse/search result table the media server 106 realizes the content is dynamic and will continuously stream data to the renderer 104. The media server 106 locates 812 the location of the latest content within the content directory of the media server using the URL. The latest dynamic content is transmitted 814 by the media server to the renderer 104 in the form of a video file. The renderer 104 receives 816 and renders the video file.

The latest data feed of the dynamic content is retrieved 818 by the media server 106 over the Internet and cross coded 820 into a format and file type acceptable by the renderer 104. In one embodiment, the media server 106 cross codes the data into JPEGs (or other still image formats, such as GIF, PNG, or the like). In one embodiment, the feed on dynamic content is retrieved by the media server 106 from a device on the local network. Continuing in FIG. 8B, identification number is assigned 822 by the media server 106 to the each individual file of the cross coded data. The identification number is associated to a URL with the location of the file and are both stored in the browse/search results table. The media server 106 builds or updates 824 the content directory and translates 826 the content directory. Video frames are composed 828 by the media server 106 using the cross coded files. The video frames are transmitted 830 to the renderer 104. The renderer 104 receives and renders the video frames. Steps 818-824 repeat until the user selects to end the rendering of the dynamic content.

In one embodiment, if the renderer 104 only renders still images then the media server 106 will not continuously compose and transmit video frames to the renderer 104. Instead the user navigates the content directory to view the latest still image created by the media server 106 in the content directory. In one embodiment; the still images contain a time stamp and are organized in the content directory in a way for the user to easily navigate to the latest still image of the dynamic content.

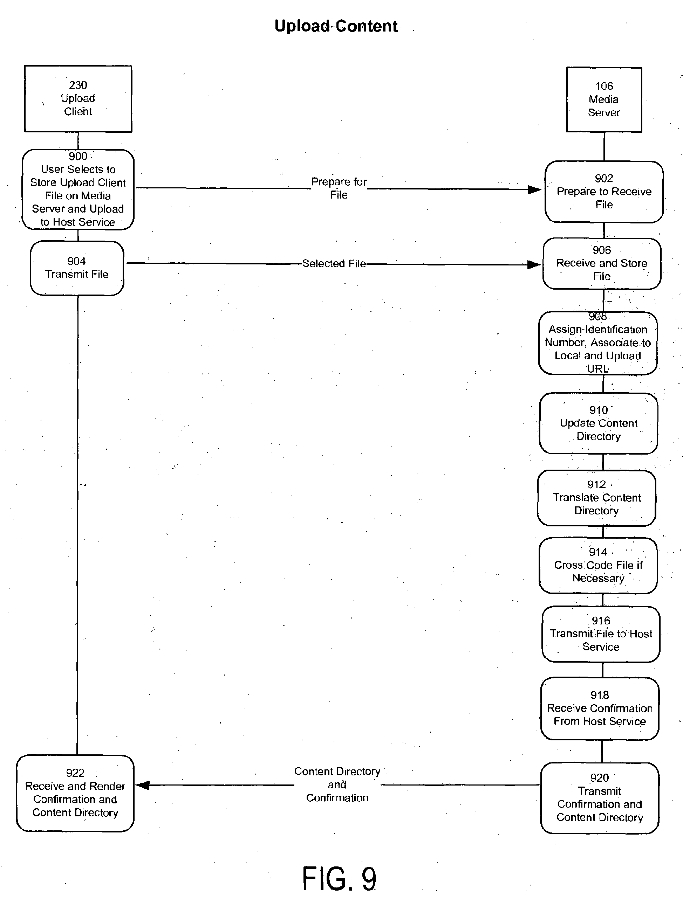

FIG. 9 is sequence diagram illustrating the process of transferring content from an upload client 230 to the media server 106 and transmitting the content over the Internet onto a host service according to one embodiment. Those of skill in the art will recognize that other embodiments can perform the steps of FIG. 9 in different orders. Moreover, other embodiments can include different and/or additional steps than the ones described here.

FIG. 9 illustrates steps performed by the upload client 230 and the media server 106 in transferring content from the upload client 230 to the media server 106 for storing and additionally transmitting the content over the Internet onto a host service. Initially, the user selects 900 to store a file contained by the upload client 230 in the media server 106 and to also have the file transmitted to a host service over the Internet. The media server prepares 902 to receive the file, based on request from control point 102.

The file is transmitted 904 by the upload client 230. The media server 106 receives 906 and stores the file. If the file does not contain a unique identification number, one is assigned 908 associated to a URL that contains the location of the file in the media server 106. The unique identification number and the URL are both placed in the browse/search results table, along with an associated upload URL that contains the location of where the file will be uploaded. The upload URL is created and sent to the media server 106 by a hosting service (e.g. video or image sharing site).

The content directory in the media server is updated 910 to include the identification number of the new file, if it is not already in directory. The content directory is translated 912 by the media server 106. If the hosting service requires the file to be in a certain format and file type, the media server 106 will cross code 914 the file into a format accepted by the hosting service. The file is transmitted 916 from the media server 106 to the host service. Upon the completion of the transmission the media server 106 receives 918 a confirmation of a successful upload to the host service.

The media server 106 transmits 920 the confirmation and the content directory to the upload client 230. The upload client 230 receives 922 and renders to the user the confirmation and the content directory through the upload client interface. The content directory is rendered for the user to see that the file is now in the content directory. In one embodiment, as the file is transferred from the upload client 230 to the media server 106, the file is simultaneously transmitted to the host service. The upload client 230 may transmits the file for storage in the media server 106 only, or may use the media server 106 to transmit content from the upload client 230 to host service and not store the file in the media server 106.

An example of the user transmitting a video file to a host service (e.g. YOUTUBE) is explained below for ease of understanding the present invention. It is emphasized that the present invention is not limited to only transmitting video files to specific host services. In one embodiment, an upload client 230 (e.g. video recording device) joins the local network. The user requests to transfer the video file stored on the upload client 230 to the media server 106 (in this example, a personal computer) and to additionally transmit the file to the host service. The video file is transmitted from the upload client 230 to the media server 106. Once the transmission is complete, the media server 106 uploads the video file to the host service, via an API exposed by the host service, by a file transfer protocol, or the like. The video file now stored on the host service's remote server is available for anyone on the Internet to access. In one embodiment, the users that can access the video file are restricted to select users.

In one embodiment, the purpose of transmitting the content to the remote service is to share the content with a second UPnP local network. The sharing of the content is accomplished by a media server on the second UPnP local network querying the host service, assigning an identification number to the content responsive to the query, associating a URL with the location of the content to the identification numbers of the content responsive to the query, and including the content in a content directory for the second UPnP local network. If a user on the second UPnP local network selects to render the specific content stored on the host service, the media server of the second UPnP local network requests to have the specific content transmitted from the host service. Once the media server on the second local network receives the specific content from the host service, the content is rendered on a renderer in the second UPnP local network. This capability overcomes the limitation in conventional UPnP protocols which by themselves do not allow a UPnP device on a first UPnP local network to exchange or access content on a second UPnP local network.

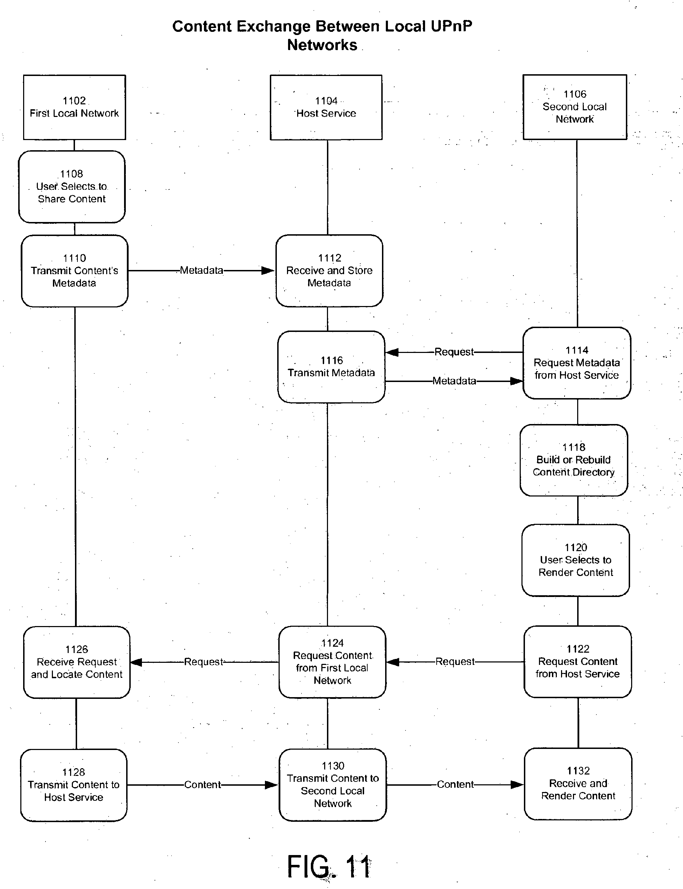

FIG. 11 is sequence diagram illustrating the process of a first UPnP local network 1102 sharing and exchanging the content stored on the first UPnP local network 1102 with a second UPnP local network 1106 according to one embodiment. Those of skill in the art will recognize that other embodiments can perform the steps of FIG. 11 in different orders. Moreover, other embodiments can include different and/or additional steps than the ones described here.

FIG. 11 illustrates steps performed by the first local network 1102, a host service 1104, and the second local network 1106 in rendering content on a renderer 104 in the second local network 1106, the content being stored on a device in the first local network 1106. Initially, a user on the first local network 1102 selects 1108 to share content within the first local network with the second local network. In one embodiment, the user of the first local network can choose to share the content with specific local networks, specific users, and/or anyone connected to the Internet. A media server 106 on the first local network 1102 transmits 1110 the content's metadata to the host service 1104. The host service 1104 receives 1112 and stores the metadata in a specific location.

The second local network 1106 in the process of building or rebuilding a content directory for the devices on the second local network 1106 requests 1114 the metadata of specific content or all metadata stored in a specific location from the host service 1104. The host service 1104 transmits 1116 the metadata of the content to the second local network 1106. A media server 106 on the second local network 1106 with the metadata of the content builds 1118 or rebuilds the content directory to include the content of the metadata.

A user on the second local network selects 1120 to render the content of the metadata stored on the host service 1104. The second local network 1106 then requests 1122 from the host service 1104 the content associated with the metadata. The host service 1104 receives the request from the second local network 1106, determines that the first local network contains the content requested, and requests 1124 the content associated with the metadata from the first local network 1102. The media server 106 on the first local network 1102 locates the content and transmits 1128 the content to the host service 1104. In one embodiment, prior to transmitting the content, the media server 106 cross codes the content into a specific file type and format if requested by the media server on the second local network. The host service 1104 determines that the second local network requested the content and transmits 1130 the content to the second local network. The content is received 1132 by the second local network 1106 and rendered on a renderer 104 in the second local network 1106.

An example of a first local network sharing a still image album file with a second local network is explained below for ease of understanding the present invention. It is emphasized that the present invention is not limited to exchanging only still image albums between two local networks. In one embodiment, a user on the first local network decides to share an album with a second local network (e.g. sharing birthday pictures with a family member in another country). The album's metadata is transmitted to a host service (e.g: PICASA WEB from GOOGLE INC. of Mountain View, CA). The second local network retrieves the metadata stored on the host service. The metadata of the album is added to a content directory of the second local network. A user on the second local network navigates the content directory and selects to render a still image from the album stored on the first local network. The second local network requests the still image associated to the metadata from the host service. The host service relays the request to the first local network. The first local network retrieves the still image requested, transmits it to the host-service, and the host service relays the still image to the second local network for rendering. This capability further overcomes the limitation in conventional UPnP protocols which by themselves do not allow a UPnP device on a first UPnP local network to exchange or access content on a second UPnP local network.

The present invention has been described in particular detail with respect to various possible embodiments, and those of skill in the art will appreciate that the invention may be practiced in other embodiments. First, the particular naming of the components, capitalization of terms, the attributes, data structures, or any other programming or structural aspect is not mandatory or significant, and the mechanisms that implement the invention or its features may have different names, formats, or protocols. Further, the system may be implemented via a combination of hardware and software, as described, or entirely in hardware elements. Also, the particular division of functionality between the various system components described herein is merely exemplary, and not mandatory; functions performed by a single system component may instead be performed by multiple components, and functions performed by multiple components may instead performed by a single component.

Some portions of above description present the features of the present invention in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times, to refer to these arrangements of operations as modules or by functional names, without loss of generality.

Unless specifically stated otherwise as apparent- from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the present invention include process steps and instructions described herein in the form of an algorithm. It should be noted that the process steps and instructions of the present invention could be embodied in software, firmware or hardware, and when embodied in software, could be downloaded to reside on and be operated from different platforms used by real time network operating systems.

The present invention also relates to an apparatus for performing the operations herein. This apparatus may be specially constructed for the required purposes, or it may comprise a general-purpose computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various general-purpose systems may also be used with programs in accordance with the teachings herein, or it may prove convenient to construct more specialized apparatus to perform the required method steps. The required structure for a variety of these systems will be apparent to those of skill in the, along with equivalent variations. In addition, the present invention is not described with reference to any particular programming-language: It is appreciated that a variety of programming languages may be used to implement the teachings of the present invention as described herein, and any references to specific languages are provided for disclosure of enablement and best mode of the present invention.

The present invention is well suited to a wide variety of computer network systems over numerous topologies. Within this field, the configuration and management of large networks comprise storage devices and computers that are communicatively coupled to dissimilar computers and storage devices over a network, such as the Internet,

Finally, it should be noted that the language used in the specification has been principally selected for readability and instructional purposes, and may not have been selected to delineate or circumscribe the inventive subject matter. Accordingly, the disclosure of the present invention is intended to be illustrative, but not limiting, of the scope of the invention, which is set forth in the following claims.

## Claims

1. A computer program product, comprising a computer readable storage medium having computer program instructions and data embodied thereon to adapt a content server (106) on a local network to enumerate, cross code, and provide content to a renderer (104) coupled to the local network (220), the renderer (104) and content server (106) communicating via first communication protocol restricted to managing communication within the local network, the content server (106) further adapted to communicate using a second communication protocol for transporting content and data within and across networks, the computer program instructions and data to adapt the content server (106) to perform operations comprising:
identifying, by the content server (106), a first content file stored on a content source;
determining by the content server (106), via the first communication protocol, a file type and data format renderable by the renderer (104);
and **characterized by**:
responsive to the first content file not being in a file type and data format renderable by the renderer (104), cross coding by the content server (106) the first content file, wherein cross coding the first content file comprises:
placing information from the unrenderable first content file into a template; and
processing the template to create a second content file in a different file type and data format which is renderable by the renderer (104); and
storing the second content file.

2. The computer program product of claim 1, wherein the local network (220) is in a UPnP architecture and the first communication protocol is a UPnP communication protocol.

3. The computer program product of claim 1, wherein a device on the local network (220) comprises a media management application and a repository of media files and the computer program instructions and data to further adapt the content server (106) to perform operations comprising:
querying the media management application for media files; and
responsive to one or more of the media files not being in a file type and data format renderable by the renderer (104), cross coding the one or more files into a file type and data format renderable by the renderer (104).

4. The computer program product of claim 3, the computer program instructions and data to further adapt the content server (106) to perform operations comprising :
enumerating by the content server (106) the media files to create a directory with unique identifiers representing each file; and
providing the directory from the content server (106) to a control point (102), via the second communication protocol.

5. The computer program product of claim 4, wherein enumerating by the content server (106) the media files comprises:
providing each media file with a unique identifier;
associating the unique identifier of each file to a pointer corresponding to the location of the file;
creating the directory using the unique identifiers of the files; and
translating the directory into a format readable by a device that requests the directory.

6. The computer program product of claim 4, the computer program instructions and data to further adapt the content server (106) to perform operations comprising organizing the directory according to a rendering history of devices on the local network.

7. The computer program product of claim 5, wherein translating the directory into a format readable by a device comprises translating the directory into an extensible markup language.

8. The computer program product of claim 4, the computer program instructions and data to further adapt the content server (106) to perform operations comprising:
receiving from the renderer (104) at the content server (106), a selection of a media file from the directory; and
transmitting from the content server (106) to the renderer (104), via the second communication protocol the selected file in the directory to the renderer (104), wherein the renderer (104) renders the selected file.

9. The computer program product of claim 4, the computer program instructions and data to further adapt the content server to perform operations comprising
querying remote servers coupled to a remote network for files, via the second communication protocol;
retrieving data feeds from remote sources, via the second communication protocol; and
adding the queried files and the retrieved data feeds to the directory.

10. The computer program product of claim 1, wherein the template is selected from a plurality of templates based on the unrenderable first content file and dimensions renderable by the renderer (104).

11. The computer program product of claim 1, wherein the first content file comprises a video file, and cross coding of the first content file comprises:
selecting frames of the first content file as individual images; and
processing the selected frames to generate individual image files renderable by the renderer (104).

12. The computer program product of claim 1, wherein the first content file is an image file and cross coding the first content file comprises processing the first content file and one or more other image files to generate a video file.

13. A computer-implemented system (106), coupled to a local network, and adapted to enumerate, cross code, and provide content to a renderer (104) coupled to the local network, the renderer (104) and system communicating via a first communication protocol restricted to managing communication between devices across the local network, and the system further adapted to communicate using a second communication protocol for transporting content and data within and across networks, the system comprising:
a computer processor; and
a computer-readable storage medium storing computer program modules configured to execute on the computer processor, the computer program modules comprising:
a media management module (512) configured to identify a first content file stored on a content source; and
a cross coding module (522) configured to:
determine via the first communication protocol, a file type and data format renderable by the renderer (104);
and **characterized by**:
cross code the first content file, responsive to the first content file not being in a file type and data format renderable by the renderer (104), wherein cross coding the first content file comprises:
placing information from the unrenderable first content file into a template; and
processing the template to create a second content file in a different file type and data format which is renderable by the renderer (104); an
storing the second content file.

14. The system of claim 13 (106), wherein the first content file comprises a video file and the cross coding module is further configured to:
select frames of the first content file as individual images; and
process the selected frames to generate individual image files renderable by the renderer (104).

15. The system of claim 13 (106), wherein the first content file is an image file and the cross coding module is further configured to process the first content file and one or more other image files to generate a video file.

## Patentansprüche

1. Ein Computerprogrammprodukt ein computerlesbares Speichermedium mit darauf verkörperten Programmbefehlen Daten, einen Content Server (106) dazu anzupassen, auf einem lokalen Netzwerk Content zählen, kreuzzucodieren und an einen Renderer (104) liefern, der an das lokale Netzwerk (220) gekoppelt ist, wobei der Renderer (104) und der Content Server (106) über ein erstes Kommunikationsprotokoll kommunizieren, dass darauf beschränkt ist, Kommunikation innerhalb des lokalen Netzwerks zu managen, wobei der Content Server (106) ferner angepasst ist, unter Verwendung eines weiteren Kommunikationsprotokolls zum Transport von Content und Daten innerhalb von und über Netzwerke hinweg zu kommunizieren, wobei die Computerprogrammbefehle und Daten zum Anpassen des Content Servers (106) zum Ausführen von Operationen aufweisen:
Identifizieren, durch den Content Server (106), eines ersten Contentfiles, das auf einer Contentquelle gespeichert ist;
Ermitteln durch den Content Server (106), über das erste Kommunikationsprotokoll, eines Filetyps und Datenformats, das durch den Renderer (104) gerendert werden kann;
und **gekennzeichnet durch**:
in Reaktion darauf, dass das erste Content File nicht in einem Filetyp und Datenformat ist, dass **durch** den Renderer (104) gerendert werden kann, Kreuzcodieren des ersten Content Files **durch** den Content Server (106), wobei das Kreuzcodieren des ersten Contentfiles aufweist:
Platzieren von Information aus dem nicht renderbaren ersten Content File in ein Template; und
Verarbeiten des Templates, um ein zweites Content File in einem unterschiedlichen Filetyp und Datenformat zu erzeugen, das **durch** den Renderer (104) gerendert werden kann; und
Speichern des zweiten Contentfiles.

2. Das Computerprogramm-Produkt nach Anspruch 1, wobei das lokale Netzwerk (220) in einer UpnP-Architektur ist und das erste Kommunikationsprotokoll ein UpnP- Kommunikationsprotokoll ist.

3. Das Computerprogramm-Produkt nach Anspruch 1, wobei ein Gerät auf dem lokalen Netzwerk (220) eine Media-Management-Anwendung und ein Repository von Mediendateien aufweist und wobei die Computerprogrammbefehle und Daten, um den Content Server (106) ferner anzupassen, Operationen auszuführen, aufweisen:
Abfragen der Media-Management-Anwendung nach Mediendateien;
in Reaktion darauf, dass eine oder mehrere der Mediendateien nicht in einem Filetyp und Datenformat sind, die durch den Renderer gerendert werden können (104), Kreuz codieren der ein oder mehreren Dateien in einen Pfeiltyp und ein Datenformat, das durch den Renderer (104) gerendert werden kann.

4. Das Computerprogramm-Produkt nach Anspruch 3, wobei die Computerprogrammbefehle und Daten, um den Content Server (106) ferner anzupassen, Operationen auszuführen, aufweisen:
Enumerieren der Medienfiles durch den Content Server, um einen Verzeichnis mit eindeutigen Bezeichnern zu erzeugen, das jede Datei repräsentiert; und
liefern des Verzeichnisses von dem Content Server (106) an einen Kontrollpunkt (102), über das zweite Kommunikationsprotokoll.

5. Das Computerprogramm-Produkt nach Anspruch 4, wobei das Enumerieren der Mediendateien durch den Content Server (106) aufweist:
Versehen jeder Mediendatei mit einem eindeutigen Bezeichner;
assoziieren des eindeutigen Bezeichner jeder Datei mit einem Pointer, der dem Ort der Datei entspricht;
Erzeugen des Verzeichnisses unter Verwendung der eindeutigen Bezeichner der Dateien; und
Übersetzen des Verzeichnisses in ein Format, das lesbar ist durch ein Gerät, das das Verzeichnis anfordert.

6. Das Computerprogramm-Produkt nach Anspruch 4, wobei die Computerprogrammbefehle und Daten, um den Content Server (106) ferner anzupassen, Operationen auszuführen, aufweisen: das Organisieren des Verzeichnisses gemäß einer Rendering-Historie von Geräten auf dem lokalen Netzwerk.

7. Das Computerprogramm-Produkt nach Anspruch 5, wobei das übersetzen des Verzeichnisses in ein Format, das durch ein Gerät lesbar ist, aufweist das übersetzen des Verzeichnisses in eine erweiterbare Markup-Sprache.

8. Das Computerprogramm-Produkt nach Anspruch 4, wobei die Computerprogrammbefehle und Daten, um den Content Server (106) ferner anzupassen, Operationen auszuführen, aufweisen:
Empfangen, von dem Renderer (104), an dem Content Server (106) einer Selektion eines Medienfiles von dem Verzeichnis; und
Übertragen des ausgewählten Files von dem Content Server (106) an den Renderer (104), über das zweite Kommunikationsprotokoll an den Renderer (104), wobei der Renderer (104) das ausgewählte File rendert.

9. Das Computerprogramm-Produkt nach Anspruch 4, wobei die Computerprogrammbefehle und Daten, um den Content Server (106) ferner anzupassen, Operationen auszuführen, aufweisen:
Abfragen von Remote Servern, die an ein Remote-Netzwerk gekoppelt sind, nach Files über das zweite Kommunikationsprotokoll;
Abrufen von Daten-Feeds von entfernten Quellen über das zweite Kommunikationsprotokoll; und
Hinzufügen der abgefragten Dateien und der abgerufenen Daten-Feeds zu dem Verzeichnis.

10. Das Computerprogramm-Produkt nach Anspruch 1, wobei das Template ausgewählt wird von einer Mehrzahl von Templates basierend auf dem nicht renderbaren ersten Content File und Dimensionen, die durch den Renderer (104) gerendert werden können.

11. Das Computerprogramm-Produkt nach Anspruch 1, wobei das erste Content File ein Videofile aufweist und das Kreuzcodieren des ersten Contentfiles aufweist:
Auswählen von Frames des ersten Contentfiles als individuelle Bilder; und
Verarbeiten der ausgewählten Frames zum erzeugen individueller Bildfiles, die durch den Renderer (104) gerendert werden können.

12. Das Computerprogramm-Produkt nach Anspruch 1, wobei das erste Content File ein Bildfile ist das Kreuzcodieren des ersten Contentfiles aufweist:
verarbeiten des ersten Contentfiles und eines oder mehrerer anderer Bildfiles zum Erzeugen eines Videofiles.

13. Ein computerimplementiertes System (106), das an ein lokales Netzwerk gekoppelt ist und angepasst ist zum Enumerieren, Kreuzcodieren und liefern von Content an einen Renderer (104), der an das lokale Netzwerk angeschlossen ist, wobei der Renderer (104) und das System über ein erstes Kommunikationsprotokoll kommunizieren, dass dass darauf beschränkt ist, Kommunikation zwischen Geräten innerhalb des lokalen Netzwerks zu managen, und das System ferner angepasst ist, unter Verwendung eines weiteren Kommunikationsprotokolls zum Transport von Content und Daten innerhalb von und über Netzwerke hinweg zu kommunizieren, wobei das System aufweist:
einen Computerprozessor; und
ein computerlesbares Speichermedium zum Speichern von Computerprogramm-Modulen, die konfiguriert sind, auf dem Computerprozessor ausgeführt zu werden, wobei die Computerprogrammmodule aufweisen:
ein Medien-Management Modul (512), dass konfiguriert ist zum Identifizieren, durch den Content Server (106), eines ersten Contentfiles, das auf einer Contentquelle gespeichert ist;
ein Kreuz Kodierungs-Modul (522), dass konfiguriert ist zum:
Ermitteln, über das erste Kommunikationsprotokoll, eines Filetyps und Datenformats, das durch den Renderer (104) gerendert werden kann;
und **gekennzeichnet durch**:
in Reaktion darauf, dass das erste Content File nicht in einem Filetyp und Datenformat ist, das **durch** den Renderer (104) gerendert werden kann, Kreuzcodieren des ersten Content Files **durch** den Content Server (106), wobei das Kreuzcodieren des ersten Contentfiles aufweist:
Platzieren von Information aus dem nicht renderbaren ersten Content File in ein Template; und
Verarbeiten des Templates, um ein zweites Content File in einem unterschiedlichen Filetyp und Datenformat zu erzeugen, das **durch** den Renderer (104) gerendert werden kann; und
speichern des zweiten Contentfiles.

14. Das System nach Anspruch 13 (106), wobei das erste Content File ein Videofile aufweist und das Kreuzkodierungsmodul ferner konfiguriert ist zum:
Auswählen von Frames des ersten Contentfiles als individuelle Bilder; und
Verarbeiten der ausgewählten Frames zum erzeugen individueller Bildfiles, die durch den Renderer (104) gerendert werden können.

15. Das System nach Anspruch 13 (106), wobei das erste Content File ein Bildfile ist und das Kreuzcodierungsmodul konfiguriert ist zum Verarbeiten des ersten Contentfiles und eines oder mehrerer anderer Bildfiles zum Erzeugen eines Videofiles.

## Revendications

1. Produit de programme informatique, comprenant un support de stockage lisible par ordinateur ayant des instructions de programme informatique et des données intégrées sur celui-ci pour adapter un serveur de contenu (106) sur un réseau local pour énumérer du contenu, en effectuer un codage croisé et le fournir à une unité de restitution (104) associée au réseau local (220), l'unité de restitution (104) et le serveur de contenu (106) communiquant via un premier protocole de communication restreint à une gestion des communications au sein du réseau local, le serveur de contenu (106) étant encore adapté pour communiquer à l'aide d'un deuxième protocole de communication permettant de transporter du contenu et des données au sein de réseaux et d'un réseau à un autre, les instructions de programme informatique et les données pour adapter le serveur de contenu (106) pour effectuer des opérations comprenant :
l'identification, par le serveur de contenu (106), d'un premier fichier de contenu stocké sur une source de contenu ;
la détermination par le serveur de contenu (106), via le premier protocole de communication, d'un type de fichier et d'un format de données pouvant être restitués par l'unité de restitution (104) ;
*et **caractérisé par** :*
la réalisation d'un codage croisé, par le serveur de contenu (106), du premier fichier de contenu, si le premier fichier de contenu n'est pas dans un type de fichier et dans un format de données pouvant être restitués par l'unité de restitution (104), le codage croisé du premier fichier de contenu comprenant :
la mise en place, dans un modèle, des informations du premier fichier de contenu non restituable ; et
le traitement du modèle afin de créer un deuxième fichier de contenu dans un type de fichier et dans un format de données différents, qui est restituable par l'unité de restitution (104) ; et
le stockage du deuxième fichier de contenu.

2. Produit de programme informatique selon la revendication 1, dans lequel le réseau local (220) est dans une architecture UPnP et le premier protocole de communication est dans un protocole de communication UPnP.

3. Produit de programme informatique selon la revendication 1, dans lequel un appareil sur le réseau local (220) comprend une application de gestion multimédia et un référentiel de fichiers multimédia et les instructions de programme informatique et les données pour encore adapter le serveur de contenu (106) pour effectuer des opérations comprenant :
l'interrogation de l'application de gestion multimédia relativement à des fichiers multimédia ; et
si un ou plus des fichiers multimédia ne sont pas dans un type de fichier et dans un format de données restituables par l'unité de restitution (104), le codage croisé d'un ou plusieurs fichiers dans un type de fichier et dans un format de données restituables par l'unité de restitution (104).

4. Produit de programme informatique selon la revendication 3, les instructions de programme informatique et les données pour encore adapter le serveur de contenu (106) pour effectuer des opérations comprenant :
l'énumération, par le serveur de contenu (106), des fichiers multimédia pour créer un répertoire avec des identifiants uniques représentant chaque fichier; et
la fourniture du répertoire depuis le serveur de contenu (106) à un point de contrôle (102), via le deuxième protocole de communication.

5. Produit de programme informatique selon la revendication 4, dans lequel l'énumération, par le serveur de contenu (106), des fichiers multimédia comprend :
la fourniture, à chaque fichier multimédia, d'un identifiant unique ;
l'association de l'identifiant unique de chaque fichier à un pointeur correspondant à l'emplacement du fichier;
la création du répertoire à l'aide des identifiants uniques des fichiers ; et
la conversion du répertoire dans un format lisible par un appareil demandant le répertoire.

6. Produit de programme informatique selon la revendication 4, les instructions de programme informatique et les données pour encore adapter le serveur de contenu (106) pour effectuer des opérations comprenant l'organisation du répertoire selon un historique de restitution des appareils sur le réseau local.

7. Produit de programme informatique selon la revendication 5, dans lequel la conversion du répertoire dans un format lisible par un appareil comprend la conversion du répertoire dans un langage de balisage extensible.

8. Produit de programme informatique selon la revendication 4, les instructions de programme informatique et les données pour encore adapter le serveur de contenu (106) pour effectuer des opérations comprenant :
la réception, en provenance de l'unité de restitution (104), au niveau du serveur de contenu (106), d'une sélection d'un fichier multimédia issu du répertoire ; et
la transmission, à partir du serveur de contenu (106), à l'unité de restitution (104), via le deuxième protocole de communication, du fichier sélectionné dans le répertoire à l'unité de restitution (104), l'unité de restitution (104) restituant le fichier sélectionné.

9. Produit de programme informatique selon la revendication 4, les instructions de programme informatique et les données pour encore adapter le serveur de contenu pour effectuer des opérations comprenant :
l'interrogation de serveurs distants associés à un réseau distant relativement à des fichiers, via le deuxième protocole de communication ;
la récupération de flux de données en provenance de sources distantes, via le deuxième protocole de communication ; et
l'ajout des fichiers interrogés et des flux de données récupérés au répertoire.

10. Produit de programme informatique selon la revendication 1, dans lequel le modèle est sélectionné parmi une pluralité de modèles basés sur le premier fichier de contenu non restituable et des dimensions restituables par l'unité de restitution (104).

11. Produit de programme informatique selon la revendication 1, dans lequel le premier fichier de contenu comprend un fichier vidéo, et dans lequel le codage croisé du premier fichier de contenu comprend :
la sélection de trames du premier fichier de contenu comme images individuelles; et
le traitement des trames sélectionnées pour générer des fichiers d'images individuelles restituables par l'unité de restitution (104).

12. Produit de programme informatique selon la revendication 1, dans lequel le premier fichier de contenu est un fichier d'images et le codage croisé du premier fichier de contenu comprend le traitement du premier fichier de contenu et d'un ou plusieurs autres fichiers d'images pour générer un fichier vidéo.

13. Système mis en oeuvre par ordinateur (106), associé à un réseau local, et adapté pour énumérer un contenu, en effectuer un codage croisé et le fournir à une unité de restitution (104) associée au réseau local, l'unité de restitution (104) et le système communiquant via un premier protocole de communication restreint à une gestion des communications entre des appareils à travers le réseau local, et le système étant encore adapté pour communiquer à l'aide d'un deuxième protocole de communication permettant de transporter du contenu et des données au sein de réseaux et d'un réseau à un autre, le système comprenant :
un processeur d'ordinateur; et
un moyen de stockage lisible par ordinateur stockant des modules de programme informatique configurés pour s'exécuter sur le processeur de l'ordinateur, les modules de programme informatique comprenant :
un module de gestion multimédia (512) configuré pour identifier un premier fichier de contenu stocké sur une source de contenu ; et
un module de codage croisé (522) configuré pour :
déterminer, via le premier protocole de communication, un type de fichier et un format de données restituables par l'unité de restitution (104) ;
*et **caractérisé par** :*
un codage croisé du premier fichier de contenu, si le premier fichier de contenu n'est pas dans un type de fichier et dans un format de données restituables par l'unité de restitution (104), le codage croisé du premier fichier de contenu comprenant :
la mise en place, dans un modèle, des informations du premier fichier de contenu non restituable ; et
le traitement du modèle afin de créer un deuxième fichier de contenu dans un type de fichier et dans un format de données différents, qui est restituable par l'unité de restitution (104) ; et
le stockage du deuxième fichier de contenu.

14. Système (106) selon la revendication 13, dans lequel le premier fichier de contenu comprend un fichier vidéo et le module de codage croisé est en outre configuré pour :
sélectionner des trames du premier fichier de contenu comme images individuelles ; et
traiter les trames sélectionnées pour générer des fichiers d'images individuelles restituables par l'unité de restitution (104).

15. Système (106) selon la revendication 13, dans lequel le premier fichier de contenu est un fichier d'images et le module de codage croisé est en outre configuré pour traiter le premier fichier de contenu et un ou plusieurs autres fichiers d'images pour générer un fichier vidéo.
